# EUROPEAN PATENT SPECIFICATION

(11) **EP 3 429 014 B1**
(45) Date of publication and mention of the grant of the patent: **03.03.2021**
(21) Application number: 17827768.7
(22) Date of filing: 06.01.2017
(51) Int. Cl.: H01M 10/052, H01M 10/42, H01M 10/058, H01M 4/505, H01M 4/525, H01M 4/04, H01M 4/134, H01M 4/1395, H01M 4/38

(54) **LITHIUM SECONDARY BATTERY HAVING LITHIUM METAL FORMED ON CATHODE AND MANUFACTURING METHOD THEREFOR**
LITHIUMSEKUNDÄRBATTERIE MIT AUF KATHODE GEFORMTEM LITHIUMMETALL UND HERSTELLUNGSVERFAHREN DAFÜR
PILE RECHARGEABLE AU LITHIUM AYANT DU MÉTAL LITHIUM FORMÉ SUR LA CATHODE ET SON PROCÉDÉ DE FABRICATION

(30) Priority: 14.07.2016 KR 20160089154
(43) Date of publication of application: 16.01.2019
(73) Proprietor: LG Chem, Ltd., Seoul 07336 (KR)
(72) Inventor: SON, Byoung Kuk, Daejeon 34122 (KR); JANG, Min Chul, Daejeon 34122 (KR); CHOI, Jung Hun, Daejeon 34122 (KR); PARK, Eun Kyung, Daejeon 34122 (KR); PARK, Chang Hun, Daejeon 34122 (KR)
(74) Representative: Hoffmann Eitle
(86) International application number: PCT/KR2017/000209
(87) International publication number: WO 2018/012694

(56) References cited:
- JP-A- 2002 237 293
- KR-A- 20110 017 214
- KR-A- 20150 048 911
- KR-A- 20160 052 351
- KR-B1- 101 503 807
- US-A1- 2004 106 037
- US-A1- 2013 059 174
- US-A1- 2015 311 501

## Description

### [Technical Field]

The present invention relates to a lithium secondary battery, and in particular, to a lithium secondary battery having lithium metal formed a positive electrode side, and a method for manufacturing the same.

### [Background Art]

Various devices from mobile phones, wireless electronic devices to electric vehicles requiring a battery have been recently developed, and with the development of such devices, demands for secondary batteries have also increased. Particularly, with the tendency of electronic products being lighter, secondary batteries also tend to be lighter and smaller.

According with such trends, lithium secondary batteries using lithium metal as an active material have received attention. Lithium metal has low oxidation reduction potential (-3.045 V with respect to standard hydrogen electrode) and high weight energy density (3,860 mAhg⁻¹), and is expected as a negative electrode material of high capacity batteries.

However, when using lithium metal as a battery negative electrode, lithium foil is generally attached on a planar current collector to manufacture a battery, and lithium has disadvantages in that it is difficult to prepare and use in general environments since lithium has high reactivity as an alkali metal and thereby explosively reacts with water, and also reacts with oxygen in the atmosphere. Particularly, an oxide layer such as LiOH, Li₂O and Li₂CO₃ is obtained as a result of oxidation when the lithium metal is exposed in the atmosphere. When a surface oxide layer (native layer) is present on the surface, the oxide layer functions as an insulation layer lowering electric conductivity, and smooth migration of lithium ions is inhibited increasing electric resistance.

For such reasons, a vacuum deposition process is performed when forming a lithium negative electrode, and a problem of forming a surface oxide layer caused by lithium metal reactivity has been partly improved, however, lithium metal is still exposed in the atmosphere during a battery assembling process, and fundamentally suppressing surface oxide layer formation has been impossible. In view of the above, development of lithium metal electrodes capable of, while increasing energy efficiency using lithium metal, resolving a reactivity problem of the lithium and more simplifying a process has been required.

Patent Document 2 describes a battery cell comprising: (a) a cathode comprising a cathode active material having a surface area to capture or store lithium thereon, wherein the cathode active material is not a functionalized material and does not bear a functional group; (b) an anode comprising an anode current collector; (c) a porous separator disposed between the two electrodes; (d) A lithium-containing electrolyte in physical contact with the two electrodes, wherein the cathode active material has a specific surface area of no less than 100 m²/g being in direct physical contact with the electrolyte to receive lithium ions therefrom or to provide lithium ions thereto; and (e) a lithium source implemented at one or both of the two electrodes prior to a first charge or a first discharge cycle of the cell.

Patent Document 3 describes a nonaqueous electrolyte secondary battery that is provided with a positive electrode with a positive electrode active material, a negative electrode, lithium deposited on the negative electrode and an electrolyte. The lithium deposited on the negative electrode is formed on the negative electrode by charging the positive electrode and the negative electrode to which the metal lithium is electrically connected.

### [Prior Art Documents]

Patent Document 1: Korean Patent Application Publication No. 10-2016-0052323, "Lithium Electrode and Lithium Battery Including the Same"
Patent Document 2: US 2013/059174 A1
Patent Document 3 : JP 2002 237 293 A

### [Disclosure]

### [Technical Problem]

As described above, a lithium secondary battery has limits in the manufacturing process due to lithium metal reactivity, and, when assembling the battery, has a problem of declining life time and performance of the battery due to inevitable contact with oxygen and moisture in the atmosphere. As a result of extensive studies, the inventors of the present invention have found out a method of preventing contact with the atmosphere occurring when assembling a battery, and have completed the present invention.

Accordingly, an aspect of the present invention provides a lithium secondary battery having enhanced performance and life time by blocking contact with the atmosphere in a process of forming a lithium thin film of the lithium secondary battery.

### [Technical Solution]

In view of the above, when assembling a lithium secondary battery, the present invention manufactures the battery through laminating a lithium thin film on one side of a positive electrode mixture instead of on a negative electrode current collector, and in an initial charge process for operating the battery after that, migrating the lithium laminated on the positive electrode mixture to the negative electrode current collector in the form of lithium ions, and as a result, the lithium may be formed on the negative electrode current collector while being blocked from the atmosphere.

According to the present invention, there is provided a lithium secondary battery, wherein lithium metal, separated from a negative electrode current collector and located between a positive electrode mixture and a separator, is formed on one surface of the positive electrode mixture, and a polymer protective layer is formed between the negative electrode current collector and the separator, as defined in the claims.

### [Advantageous Effects]

In a lithium secondary battery according to the present invention, coating is performed while being blocked from the atmosphere through a process of forming a lithium thin film on a negative electrode current collector, and therefore, formation of a surface oxide layer of lithium metal caused by oxygen and moisture in the atmosphere can be suppressed, which resultantly leads to an effect of enhancing a cycle life property.

### [Description of Drawings]

FIG. 1 is a mimetic diagram of a lithium secondary battery.
FIG. 2 is a mimetic diagram showing lithium ion (Li⁺) migration when initially charging the lithium secondary battery.
FIG. 3 is a mimetic diagram after completing initial charge of the lithium secondary battery.
FIG. 4 is a mimetic diagram of a lithium secondary battery manufactured according to the present invention.

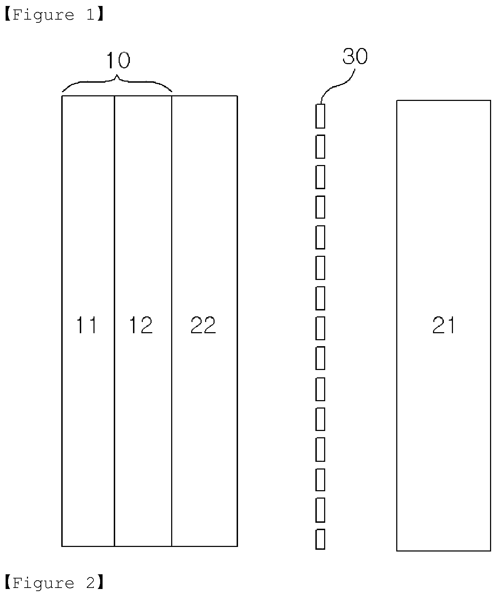

Figures 1 to 3 are given for illustrative purposes and do not show embodiments falling within the scope of the claims due to the absence of polymer protective layer (40).

### [Best Mode]

Hereinafter, the present invention will be described in detail with reference to the accompanying drawings so that those skilled in the art may readily implement the present invention. However, the present invention may be implemented in various different forms, and is not limited to the specification.

In the drawings, parts not relevant to the descriptions are not included in order to clearly describe the present invention, and like reference numerals are used for like elements throughout the specification. In addition, sizes and relative sizes of constituents shown in the drawings are unrelated to actual scales, and may be reduced or exaggerated for clarity of the descriptions.

FIG. 1 is a mimetic diagram of a lithium secondary battery including a positive electrode (10) including a positive electrode current collector (11) and a positive electrode mixture (12); a negative electrode (20) including a negative electrode current collector (21) and lithium metal (22); and a separator (30) provided therebetween and an electrolyte (not shown), wherein the lithium metal(22) is separated from the negative electrode current collector (21) and located between the positive electrode mixture (12) and the separator (30), and is formed on one surface of the positive electrode mixture (12).

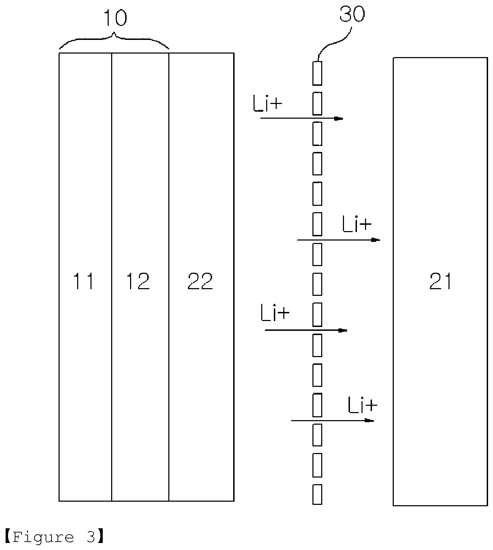

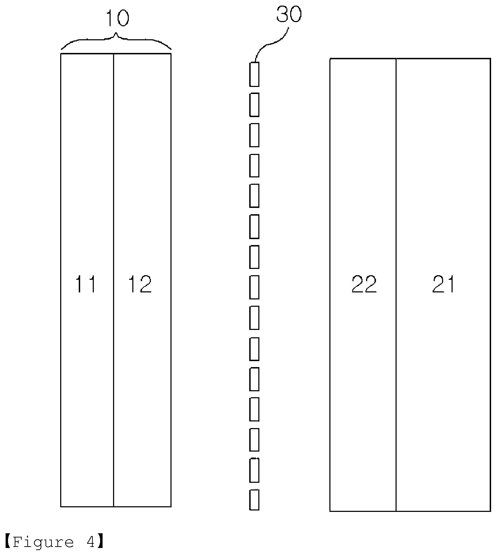

FIG. 2 is a mimetic diagram showing lithium ion (Li⁺) migration when initially charging the lithium secondary battery, and FIG. 3 is a mimetic diagram after completing initial charge of the lithium secondary battery.

When referring to FIG. 2 and FIG. 3, lithium metal (22) used as a negative electrode active material of a lithium secondary battery is formed on one surface of a positive electrode mixture (12) instead of a negative electrode current collector (21), and by initial charge when operating a battery after that, lithium ions migrate to a negative electrode side, and a lithium thin film (22) is formed on the negative electrode current collector (21). More specifically, when forming a lithium thin film (22), a negative electrode active material, on one surface of a positive electrode mixture (12), the lithium thin film (22) is formed on the negative electrode current collector (21) while being blocked from the atmosphere, and formation of a lithium surface oxide layer is prevented resultantly enhancing a life time property of a lithium secondary battery.

The lithium metal is preferably formed on the positive electrode mixture (12) in a thin film form, and the formation method is not particularly limited as long as it is a lamination or deposition process, and includes, but is not limited to, various deposition methods such as an electron beam deposition method, an organometal chemical vapor deposition method, reactive sputtering, high frequency sputtering and magnetron sputtering. Each illustrated deposition method is a known method, and specific descriptions thereon will not be included in the present specification.

The lithium thin film (22) formed on one surface of the positive electrode mixture (12) may have its width adjusted depending on an electrode shape in order to readily manufacture a battery, and specifically, the thickness is preferably from 1 µm to 100 µm. When the thickness is less than 1 µm, a cycle property is difficult to be satisfied due to insufficient lithium efficiency, and when the thickness is greater than 100 µm, a problem of energy density decrease occurs due to an increase in the lithium thickness.

The lithium secondary battery moves lithium metal formed on the positive electrode mixture (12) to the negative electrode current collector in a lithium ion form by applying a current before use, and forms a negative electrode having a lithium thin film (22) coated on the negative electrode current collector (21). Herein, the initial charge is carried out with 0.01 C-rate to 0.5 C-rate through 1 to 2 times of charge and discharge, and the reason is that the shape of lithium metal formed on a negative electrode varies depending on initial charge current density.

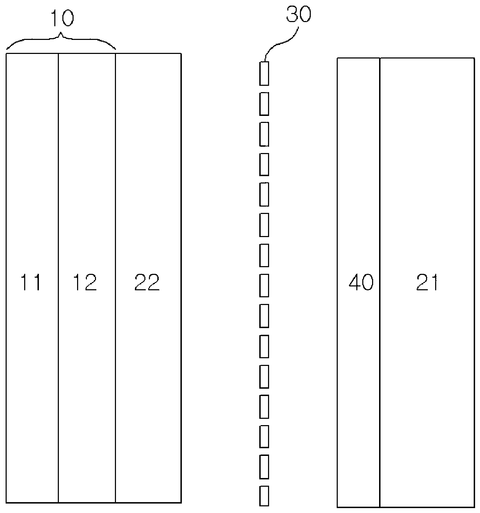

FIG. 4 is a mimetic diagram of a lithium secondary battery according to the present invention, and the present invention discloses a lithium secondary battery including a positive electrode (10) including a positive electrode current collector (11) and a positive electrode mixture (12); a negative electrode (20) including a negative electrode current collector (21) and lithium metal (22); and a separator (30) provided therebetween and an electrolyte (not shown), wherein the lithium metal (22) is separated from the negative electrode current collector (21) and located between the positive electrode mixture (12) and the separator (30), and is formed on one surface of the positive electrode mixture (12), and a polymer protective layer (40) is formed between the negative electrode current collector (21) and the separator (30). The polymer protective layer (40) is selected from the group consisting of polyethylene oxide (PEO), polyacrylonitrile (PAN), polymethyl methacrylate (PMMA), polyvinylidene fluoride (PVDF), polyvinylidene fluoride-hexafluoropropylene (PVDF-HFP), LiPON, Li₃N, LiₓLa₁₋ₓTiO₃ (0<x<1) and Li₂S-GeS-Ga₂S₃, and has a thickness of 10 nm to 1 µm.

The lithium thin film (22) of the second embodiment is the same as the lithium thin film (22) described above, and descriptions thereon will not be repeated.

The polymer protective layer (40) is a lithium ion conductive polymer, and is formed with any one selected from the group consisting of polyethylene oxide (PEO), polyacrylonitrile (PAN), polymethyl methacrylate (PMMA), polyvinylidene fluoride (PVDF), polyvinylidene fluoride-hexafluoropropylene (PVDF-HFP), LiPON, Li₃N, LixLa₁₋ₓTiO₃ (0<x<1) and Li₂S-GeS-Ga₂S₃, or a mixture of two or more types thereof.

The polymer protective layer (40) having a smaller thickness is advantageous for a battery output property, however, the layer needs to be formed to a certain thickness or larger in order to suppress a side reaction between lithium formed on the negative electrode current collector and an electrolyte afterword, and to furthermore effectively block dendrite growth. In the present invention, the polymer protective layer (40) has a thickness of 10 nm to 1 µm. When the protective layer thickness is less than 0.01 µm, a side reaction and an exothermic reaction between lithium and the liquid electrolyte, which increases under a condition of overcharge and high temperature storage, are not effectively suppressed, and safety may not be enhanced. When the thickness is greater than 50 µm, it requires a long time for the polymer matrix in the protective layer to be impregnated or swollen by the liquid electrolyte, and lithium ion migration decreases causing concern of overall battery performance decline. In considering significance of improvement effects obtained from the protective layer formation, the protective layer is formed to a thickness of 10 nm to 1 µm.

The polymer protective layer (40) may be prepared by coating or spraying a polymer composition, a mixture of the ion conductive polymer and a solvent, on the negative electrode current collector (21), or by immersing the negative electrode current collector (21) into the polymer protective layer composition, and then drying the result. More specifically, after dispersing the polymer protective layer composition into a solvent to prepare slurry, the slurry may be coated on the negative electrode current collector (21).

The solvent used herein preferably has a similar solubility index with the ion conductive polymer (20), and preferably has a low boiling point. This is due to the fact that uniform mixing may be obtained and the solvent may be readily removed later. Specifically, N,N'-dimethylacetamide (DMAc), dimethyl sulfoxide (DMSO), N,N-dimethylformamide (DMF), acetone, tetrahydrofuran, methylene chloride, chloroform, dimethylformamide, N-methyl-2-pyrrolidone (NMP), cyclohexane, water or a mixture thereof may be used as the solvent.

The method of coating the prepared polymer protective layer composition on the negative electrode current collector (21) may be selected from among known methods or may use new proper methods considering material properties and the like. For example, the polymer protective layer composition is distributed on the negative electrode current collector (21), and then uniformly dispersed using a doctor blade and the like preferably. In some cases, methods of using distribution and dispersion processes in one process may also be used. In addition thereto, methods of dip coating, gravure coating, slit die coating, spin coating, comma coating, bar coating, reverse roll coating, screen coating, cap coating and the like may be used for the preparation. Herein, the negative electrode current collector (21) is the same as described above.

After that, a drying process may be performed for the polymer protective layer (40) formed on the negative electrode current collector (21), and herein, the drying process may be performed using methods such as heating treatment or hot-air drying at a temperature of 80°C to 120°C depending on the types of solvents used in the polymer protective layer composition.

Constitutions other than the lithium thin film or the polymer protective layer (40) of the lithium secondary battery may be prepared using known technologies implemented by those skilled in the art, and hereinafter, the constitutions will be described specifically.

The negative electrode current collector (21) according to the present invention is not particularly limited as long as it has high conductivity without inducing chemical changes in a battery, and may be any one metal selected from the group consisting of copper, aluminum, stainless steel, zinc, titanium, silver, palladium, nickel, iron, chromium, alloys thereof and combinations thereof. The stainless steel may have its surface treated with carbon, nickel, titanium or silver, and aluminum-cadmium alloys may be used as the alloy, and in addition thereto, baked carbon, nonconductive polymers of which surface is treated with a conductor, conductive polymers or the like may also be used. As the negative electrode current collector, a copper thin plate is generally used.

The negative electrode current collector (21) may be generally prepared to have a thickness of 3 µm to 500 µm, and various forms such as films, sheets, foil, nets, porous bodies, foams and non-woven fabrics may be used.

The positive electrode mixture (12) according to the present invention may be prepared into a positive electrode form by filming a composition including a positive electrode active material, a conductor and a binder on a positive electrode current collector.

As the positive electrode active material, any one selected from the group consisting of LiCoO₂, LiNiO₂, LiMnO₂, LiMn₂O₄, Li (NiₐCO_{b}Mn_{c}) O₂ (0<a<1, 0<b<1, 0<c<1, a+b+c=1), LiNi_{1-y}Co_{y}O₂, LiCo_{1-y}Mn_{y}O₂, LiNi_{1-y}Mn_{y}O₂ (O≤y<1), Li (NiₐCo_{b}Mn_{c}) O₄ (0<a<2, 0<b<2, 0<c<2, a+b+c=2), LiMn_{2-z}Ni_{z}O₄, LiMn_{2-z}Co_{z}O₄ (0<z<2), LiCoPO₄ and LiFePO₄, or a mixture of two or more types thereof may be used. In addition, sulfides, selenides, halides and the like may also be used in addition to such oxides. In more preferred examples, the positive electrode active material may be LiCoO₂ suited for high output batteries.

The conductor is a component for further enhancing conductivity of a positive electrode active material, and nonlimiting examples thereof may include graphite such as natural graphite or artificial graphite; carbon black such as carbon black, acetylene black, Ketjen black, channel black, furnace black, lamp black and thermal black; conductive polymers such as carbon fiber or metal fiber; metal powders such as fluorocarbon, aluminum and nickel powder; conductive whiskers such as zinc oxide and potassium titanate; conductive metal oxides such as titanium oxide; conductive materials such as polyphenylene derivatives, and the like.

The binder has functions of keeping a positive electrode active material on a positive electrode current collector, and organically linking the positive electrode active materials, and examples thereof may include polyvinylidene fluoride (PVDF), polyvinyl alcohol (PVA), carboxymethylcellulose (CMC), starch, hydroxypropylcellulose, regenerated cellulose, polyvinyl pyrrolidone, tetrafluoroethylene, polyethylene, polypropylene, an ethylene-propylene-diene polymer (EPDM), a sulfonated-EPDM, styrene-butadiene rubber, fluoro rubber, various copolymers thereof, and the like.

The positive electrode current collector (11) is the same as described in the negative electrode current collector (21), and an aluminum thin plate may be generally used as the positive electrode current collector (11).

The separator (30) according to the present invention is not particularly limited in the material and, as a material physically separating the positive electrode (10) and the negative electrode (20) and having electrolyte and ion penetrability, those commonly used as a separator in an electrochemical device may be used without particular limit. However, as a material that is porous, nonconductive and insulating, those having an excellent liquid electrolyte moisture-containing ability while having low resistance for ion migration of the liquid electrolyte are particularly preferred. For example, a polyolefin-based porous membrane or non-woven fabric may be used, however, the separator is not particularly limited thereto.

As examples of the polyolefin-based porous membrane, membranes formed with a polymer using a polyolefin-based polymer such as polyethylene such as high density polyethylene, linear low density polyethylene, low density polyethylene and ultra-high molecular weight polyethylene, polypropylene, polybutylene and polypentene alone, or a polymer mixing these may be used.

As the non-woven fabric other than the polyolefin-based non-woven fabric described above, non-woven fabric formed with a polymer using, for example, polyphenylene oxide, polyimide, polyamide, polycarbonate, polyethylene terephthalate, polyethylene naphthalate, polybutylene terephthalate, polyphenylene sulfide, polyacetal, polyether sulfone, polyetheretherketone, polyester and the like alone, or a polymer mixing these may be used, and, as a fiber form forming a porous web, such non-woven fabric includes a spunbond or meltblown form formed with long fibers.

The thickness of the separator (30) is not particularly limited, but is preferably in a range of 1 µm to 100 µm, and more preferably in a range of 5 µm to 50 µm. When the separator has a thickness of less than 1 µm, mechanical properties may not be maintained, and when the thickness is greater than 100 µm, the separator functions as a resistive layer declining battery performance.

A pore size and porosity of the separator (30) are not particularly limited, however, the pore size is preferably from 0.1 µm to 50 µm, and the porosity is preferably from 10% to 95%. When the separator has a pore size of less than 0.1 µm or porosity of less than 10%, the separator functions as a resistive layer, and when the pore size is greater than 50 µm or the porosity is greater than 95%, mechanical properties may not be maintained.

An electrolyte capable of being used in the present invention may be a non-aqueous liquid electrolyte or a solid electrolyte not reacting with lithium metal, but is preferably a non-aqueous electrolyte, and includes an electrolyte salt and an organic solvent.

The electrolyte salt included in the non-aqueous liquid electrolyte is a lithium salt. As the lithium salt, those commonly used in liquid electrolytes for a lithium secondary battery may be used without limit. For example, an anion of the lithium salt may include any one selected from the group consisting of F⁻, Cl⁻, Br⁻, I , NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, or two or more types thereof.

As the organic solvent included in the non-aqueous liquid electrolyte, those commonly used in liquid electrolytes for a lithium secondary battery may be used without limit, and for example, ether, ester, amide, linear carbonate, cyclic carbonate and the like may be used either alone, or as a mixture of two or more types. Among these, a carbonate compound that is cyclic carbonate, linear carbonate or a mixture thereof may be typically included.

Specific examples of the cyclic carbonate compound may include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinyl ethylene carbonate and halides thereof, or a mixture of two or more types thereof. Examples of the halides thereof may include fluoroethylene carbonate (FEC) and the like, but are not limited thereto.

Specific examples of the linear carbonate compound may typically include any one selected from the group consisting of dimethyl carbonate (DMC), diethyl carbonate (DEC), dipropyl carbonate, ethylmethyl carbonate (EMC), methylpropyl carbonate and ethylpropyl carbonate, or a mixture of two or more types thereof, but are not limited thereto.

Particularly, among the carbonate-based organic solvents, ethylene carbonate and propylene carbonate that are cyclic carbonate are a high viscosity organic solvent and have a high dielectric constant, and therefore, may more favorably dissociate a lithium salt in an electrolyte, and when mixing and using linear carbonate having low viscosity and low dielectric constant such as dimethyl carbonate and diethyl carbonate in a proper ratio to such cyclic carbonate, a liquid electrolyte having higher electrical conductivity may be prepared.

In addition, as the ether among the organic solvents, any one selected from the group consisting of dimethyl ether, diethyl ether, dipropyl ether, methylethyl ether, methylpropyl ether and ethylpropyl ether, or a mixture of two or more types thereof may be used, however, the ether is not limited thereto.

As the ester among the organic solvents, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a mixture of two or more types thereof may be used, however, the ester is not limited thereto.

The non-aqueous liquid electrolyte may be injected at a proper stage in an electrochemical device manufacturing process depending on manufacturing process and required properties of a final product. In other words, the non-aqueous liquid electrolyte may be injected at a stage prior to assembling an electrochemical device or at a final stage of electrochemical device assembly.

The lithium secondary battery according to the present invention may go through lamination (stack) and folding processes of a separator and an electrode in addition to winding, a general process. In addition, the battery case may be cylindrical, square, a pouch-type, a coin-type or the like.

The lithium secondary battery according to the present invention may be manufactured by i) forming a positive electrode mixture (12) on a positive electrode current collector (11); ii) forming a lithium thin film (22) on the positive electrode mixture (12); iii) forming a polymer protective layer (40) on a negative electrode current collector (21); iv) consecutively disposing a separator (30) and the polymer protective layer (40)-formed negative electrode current collector (21) on the lithium thin film (22); and v) injecting an electrolyte.

The lithium secondary battery manufactured according to the present invention having a lithium thin film (22) formed on one surface of a positive electrode mixture (12) through initial charge is capable of laminating lithium on the positive electrode mixture (12) on a negative electrode current collector (21). The lithium thin film (22) moves in a negative electrode direction in a lithium ion (Li⁺) form through an electrolyte, and precipitated as lithium metal and laminated on the negative electrode current collector (21). In addition, lithium metal is laminated between the negative electrode current collector (21) and the polymer protective layer (40) during initial charge.

Hereinafter, the present invention will be described in detail with reference to examples. However, examples according to the present invention may be modified to various different forms, and the scope of the present invention is not to be construed as being limited to the examples described below. The examples of the present invention are provided to those having average knowledge in the art in order to more fully describe the present invention.

### [Example 1]

An LCO-based positive electrode active material, Super-P and PVdF were mixed in a weight ratio of 95:2.5:2.5, and then coated on an aluminum current collector to form a positive electrode (loading 450 mg/25 cm²). Lithium metal having a thickness of 20 µm was laminated thereon using a lamination method.

On one surface of a copper current collector, a 0.2 µm thickness LiPON protective layer-formed negative electrode was prepared.

A porous polyethylene separator was provided between the prepared positive electrode and the negative electrode to prepare an electrode assembly, and after placing the electrode assembly inside a case, an electrolyte was injected thereto to manufacture a lithium secondary battery. Herein, the electrolyte was prepared by dissolving 1 M LiPF₆ and 2% by weight of vinylene carbonate (VC) in an organic solvent formed with fluoroethylene carbonate (FEC):ethylene carbonate (EC):2 diethyl carbonate (DEC) :dimethyl carbonate (DMC) in a volume ratio of 1:1:2:1.

### [Comparative Example 1]

A lithium secondary battery was manufactured in the same manner as in Example 1 except that the LiPON protective layer was not formed in the negative electrode.

### [Example 2]

A lithium secondary battery was manufactured in the same manner as in Example 1 except that a 0.3 µm thickness PVdF-HFP (HFP content: 5% by weight) protective layer was formed on one surface of the copper current collector instead of the LiPON protective layer in the negative electrode.

### [Comparative Example 2]

A lithium secondary battery was manufactured in the same manner as in Example 1 except that lithium metal was not laminated in the positive electrode, 20 µm thickness lithium metal was laminated on one surface of the copper current collector, and the LiPON protective layer was not formed.

### [Experimental Example 1]

For the lithium secondary batteries manufactured in Example 1 and Comparative Example 2, charge and discharge tests were performed under a condition of charge with 0.2 C-rate, 4.25 V CC/CV (5% current cut at 1 C-rate) and discharge with 0.5 C-rate CC 3 V, and the cycle number reaching 80% capacity with respect to initial capacity was recorded in the following Table 1.

**[Table 1]**

| | Cycle Number at 80% Capacity with Respect to Initial Capacity |
|---|---|
| Example 1 | 230 |
| Comparative Example 2 | 130 |

The test results showed that the lithium secondary battery of Example 1 had an enhanced life time property compared to the lithium secondary battery of Comparative Example 2 by approximately 1.77 times, and it was seen that this is an effect obtained from suppressing a surface oxide layer by blocking lithium from being exposed in the atmosphere in the manufacturing process, and from the polymer protective layer on the negative electrode current collector.

### [Experimental Example 2]

For the lithium secondary batteries manufactured in Examples 1 to 2 and Comparative Example 1, charge and discharge tests were performed under a condition of charge with 0.03 C-rate, 4.25 V CC/CV (5% current cut at 1 C-rate), and then with 0.5 C-rate CC 3 V, and charge with 0.2 C-rate, 4.25 V CC/CV (5% current cut at 1 C-rate), and the cycle number reaching 80% capacity with respect to initial capacity was recorded in the following Table 2.

**[Table 2]**

| | Cycle Number at 80% Capacity with Respect to Initial Capacity |
|---|---|
| Example 1 | 350 |
| Comparative Example 1 | 275 |
| Example 2 | 332 |

The test was to prove the effect of the polymer protective layer, and when comparing Example 1 using a LiPON protective layer, Comparative Example 1 without a polymer protective layer and Example 2 using a PVdF-HFP protective layer, a life time property of the batteries having a polymer protective layer was excellent, and particularly, it was identified that the LiPON protective layer further enhanced a life time property compared to the PVdF-HFP protective layer.

In addition, it was identified that a life time property was further enhanced when initial charge was performed with current density lower than Experimental Example 1, and it can be seen that this is due to the plate shape of lithium metal initially formed on the negative electrode, and thinly and solidly formed SEI layer.

The lithium secondary battery according to the present disclosure stably exhibits excellent discharge capacity, output property and capacity retention rate, and therefore, is useful in the fields of portable devices such as mobile phones, notebook computers or digital cameras, electric vehicles such as hybrid electric vehicles (HEV), and the like.

Accordingly, another embodiment of the present disclosure provides a battery module including the lithium secondary battery as a unit cell, and a battery pack including the same. The battery module or the battery pack may be used as a power supply of any one or more of medium to large sized devices among power tools; electric vehicles including electric vehicles (EV), hybrid electric vehicles and plug-in hybrid electric vehicles (PHEV); or systems for power storage.

## Claims

1. A lithium secondary battery comprising:
a positive electrode (10) including a positive electrode current collector (11) and a positive electrode mixture (12);
a negative electrode (20) including a negative electrode current collector (21) and lithium metal (22);
a separator (30) provided therebetween and an electrolyte; and
a polymer protective layer (40) formed between the negative electrode current collector (21) and the separator (30),
**characterized in that** the lithium metal (22) is provided between the separator and the positive electrode mixture, and the lithium metal is formed on the negative electrode current collector as the lithium thin film with 0.01 C-rate to 0.5 C-rate through 1 to 2 times of charge and discharge,
the polymer protective layer is selected from the group consisting of polyethylene oxide (PEO), polyacrylonitrile (PAN), polymethyl methacrylate (PMMA), polyvinylidene fluoride (PVDF), polyvinylidene fluoride-hexafluoropropylene (PVDF-HFP), LiPON, Li₃N, LiₓLa₁₋ₓTiO₃ (0<x<1) and Li₂S-GeS-Ga₂S₃, and
the polymer protective layer has a thickness of 10 nm to 1 µm.

2. The lithium secondary battery of Claim 1, wherein the lithium metal (22) has a thickness of 1 µm to 100 µm.

3. The lithium secondary battery of Claim 1, wherein the positive electrode mixture (12) includes a positive electrode active material, a conductor and a binder.

4. The lithium secondary battery of Claim 3, wherein the positive electrode active material is selected from the group consisting of LiCoO₂, LiNiO₂, LiMnO₂, LiMn₂O₄, Li(NiₐCo_{b}Mn_{c})O₂ (0<a<1, 0<b<1, 0<c<1, a+b+c=1), LiNi_{1-y}Co_{y}O₂, LiCo_{1-y}Mn_{y}O₂, LiNi_{1-y}Mn_{y}O₂ (0≤y<1), Li (NiₐCo_{b}Mn_{c}) O₄ (0<a<2, 0<b<2, 0<c<2, a+b+c=2), LiMn_{2-z}Ni_{z}O₄, LiMn_{2-z}Co_{z}O₄ (0<z<2), LiCoPO₄, LiFePO₄ and combinations thereof.

5. A method for manufacturing a lithium secondary battery of claim 1 comprising:
i) forming a positive electrode mixture (12) on a positive electrode current collector (11);
ii) forming lithium metal (22) on the positive electrode mixture (12);
iii) forming a polymer protective layer on the negative electrode current collector (21);
iv) consecutively disposing a separator (30) and a negative electrode current collector (21) on the lithium metal (22) and then laminating the result; and
v) injecting an electrolyte,
wherein, before using the battery, forming a lithium thin film (22) on the negative electrode current collector (21) through charge and discharge.

## Patentansprüche

1. Lithium-Sekundärbatterie, umfassend:
eine positive Elektrode (10), die einen Positiv-Elektroden-Stromabnehmer (11) und eine Positiv-Elektroden-Mischung (12) umfasst;
eine negative Elektrode (20), die einen Negativelektroden-Stromabnehmer (21) und Lithiummetall (22) umfasst;
einen Separator (30), der dazwischen vorgesehen ist, und einen Elektrolyten; und
eine Polymerschutzschicht (40), die zwischen dem Negativelektroden-Stromabnehmer (21) und dem Separator (30) ausgebildet ist,
**dadurch gekennzeichnet, dass** das Lithiummetall (22) zwischen dem Separator und der Positiv-Elektroden-Mischung vorgesehen ist und das Lithiummetall auf dem Negativelektroden-Stromabnehmer durch 1- bis 2-fache Aufladung und Entladung mit 0,01 C-Rate bis 0,5 C-Rate als Lithium-Dünnfilm gebildet ist,
wobei die Polymerschutzschicht ausgewählt ist aus der Gruppe bestehend aus Polyethylenoxid (PEO), Polyacrylnitril (PAN), Polymethylmethacrylat (PMMA), Polyvinylidenfluorid (PVDF), Polyvinylidenfluorid-Hexafluorpropylen (PVDF-HFP), LiPON, Li₃N, LiₓLa₁₋ₓTiO₃ (0<x<1) und Li2S-GeS-Ga2S3, und
die Polymerschutzschicht eine Dicke von 10 nm bis 1 µm aufweist.

2. Lithium-Sekundärbatterie gemäß Anspruch 1, wobei das Lithiummetall (22) eine Dicke von 1 µm bis 100 µm aufweist.

3. Lithium-Sekundärbatterie gemäß Anspruch 1, wobei die positive Elektrodenmischung (12) ein aktives Material für die positive Elektrode, einen Leiter und ein Bindemittel enthält.

4. Lithium-Sekundärbatterie gemäß Anspruch 3, worin das Positiv-Elektroden-Aktivmaterial ausgewählt ist aus der Gruppe bestehend aus LiCoO_{2,} LiNiO₂, LiMnO₂, LiMn₂O₄, Li(NiₐCo_{b}Mn_{c})O₂ (0<a<1, 0<b<1, 0<c<1, a+b+c=1), LiNi_{1-y}Co_{y}O₂, LiCo_{1-y}Mn_{y}O₂, LiNi_{1-y}Mn_{y}O₂ (0≤y<1), Li(NiₐCo_{b}Mn_{c})O₄ (0<a<2, 0<b<2, 0<c<2, a+b+c=2), LiMn_{2-z}Ni_{z}O₄, LiMn_{2-z}Co_{z}O₄ (0<z<2), LiCoPO₄, LiFePO₄ und Kombinationen hiervon.

5. Verfahren zur Herstellung einer Lithium-Sekundärbatterie gemäß Anspruch 1, umfassend:
i) Bilden einer Positiv-Elektroden-Mischung (12) auf einem Positiv-Elektroden-Stromabnehmer (11);
ii) Bilden von Lithiummetall (22) auf der Positiv-Elektroden-Mischung (12);
iii) Bilden einer Polymerschutzschicht auf dem Negativelektroden-Stromabnehmer (21);
iv) aufeinanderfolgendes Anordnen eines Separators (30) und Negativelektroden-Stromabnehmers (21) auf dem Lithiummetall (22) und anschließendes Laminieren des sich Ergebenden; und
v) Einfüllen eines Elektrolyten,
wobei vor der Verwendung der Batterie durch Laden und Entladen ein Lithium-Dünnfilm (22) auf dem Negativelektroden-Stromabnehmer gebildet wird.

## Revendications

1. Batterie secondaire au lithium comprenant :
une électrode positive (10) incluant un collecteur de courant d'électrode positive (11) et un mélange d'électrode positive (12) ;
une électrode négative (20) incluant un collecteur de courant d'électrode négative (21) et un métal à base de lithium (22) ;
un séparateur (30) pourvu entre celles-ci et un électrolyte ; et
une couche de protection en polymère (40) formée entre le collecteur de courant d'électrode négative (21) et le séparateur (30),
**caractérisée en ce que** le métal à base de lithium (22) est pourvu entre le séparateur et le mélange d'électrode positive, et le métal à base de lithium est formé sur le collecteur de courant d'électrode négative sous la forme d'une fine pellicule de lithium ayant un taux C de 0,01 à 0,5 par l'intermédiaire de 1 à 2 cycles de charge et de décharge,
la couche de protection en polymère est sélectionnée dans le groupe constitué de l'oxyde de polyéthylène (PEO), du polyacrylonitrile (PAN), du polyméthacrylate de méthyle (PMMA), du fluorure de polyvinylidène (PVDF), du polyfluorure de vinylidène-hexafluoropropylène (PVDF-HFP), du LiPON, du Li₃N, du LiₓLa₁₋ₓTiO₃ (0 < x < 1) et du Li₂S-GeS-Ga₂S₃ et
la couche de protection en polymère présente une épaisseur de 10 nm à 1 µm.

2. Batterie secondaire au lithium selon la revendication 1, dans laquelle le métal à base de lithium (22) présente une épaisseur de 1 µm à 100 µm.

3. Batterie secondaire au lithium selon la revendication 1, dans laquelle le mélange d'électrode positive (12) inclut un matériau actif d'électrode positive, un conducteur et un liant.

4. Batterie secondaire au lithium selon la revendication 3, dans laquelle le matériau actif d'électrode positive est sélectionné dans le groupe constitué de LiCoO₂, LiNiO₂, LiMnO₂, LiMn₂O₄, Li(NiₐCo_{b}Mn_{c})O₂ (0 < a < 1, 0< b < 1, 0< c < 1, a + b + c = 1), LiNi_{1-y}CO_{y}O₂, LiCo_{1-y}Mn_{y}O₂, LiNi_{1-y}Mn_{y}O₂ (0 ≤ y < 1), Li(NiₐCo_{b}Mn_{c})O₄ (0 < a < 2, 0 < b < 2, 0 < c < 2, a + b + c = 2), LiMn_{2-z}Ni_{z}O₄, LiMn_{2-z}CO_{z}O₄ (0 < z < 2), LiCoPO₄, LiFePO₄ et leurs combinaisons.

5. Procédé de fabrication d'une batterie secondaire au lithium selon la revendication 1, comprenant les étapes consistant à :
i) former un mélange d'électrode positive (12) sur un collecteur de courant d'électrode positive (11) ;
ii) former un métal à base de lithium (22) sur le mélange d'électrode positive (12) ;
iii) former une couche de protection en polymère sur le collecteur de courant d'électrode négative (21) ;
iv) disposer consécutivement un séparateur (30) et un collecteur de courant d'électrode négative (21) sur le métal à base de lithium (22) puis stratifier le résultat ; et
v) injecter un électrolyte,
dans lequel, avant d'utiliser la batterie, il s'agit de former une fine pellicule de lithium (22) sur le collecteur de courant d'électrode négative (21) par l'intermédiaire d'une charge et d'une décharge.
